# FASCICULE DE BREVET EUROPEEN

(11) **EP 3 634 837 B1**
(45) Date de publication et mention de la délivrance du brevet: **16.06.2021**
(21) Numéro de dépôt: 18723363.0
(22) Date de dépôt: 26.04.2018
(51) Int. Cl.: B62D 25/06, B60J 7/00

(54) **ENSEMBLE DE STRUCTURE DE CARROSSERIE AVEC UNE TRAVERSE SUPERIEURE ADAPTEE POUR UN TOIT OUVRANT OU NON OUVRANT**
KAROSSERIESTRUKTURANORDNUNG MIT EINEM OBEREN QUERTRÄGER, DER FÜR EIN SCHIEBE- ODER NICHTSCHIEBEDACH KONSTRUIERT IST
BODY STRUCTURE ASSEMBLY WITH AN UPPER CROSS-MEMBER DESIGNED FOR A SLIDING OR NON-SLIDING ROOF

(30) Priorité: 06.06.2017 FR 1754985
(43) Date de publication de la demande: 15.04.2020
(73) Titulaire: PSA Automobiles SA, 78300 Poissy (FR)
(72) Inventeur: MAUDUIT, Franck, 91490 Milly La Foret (FR)
(86) Numéro de dépôt international: PCT/FR2018/051054
(87) Numéro de publication internationale: WO 2018/224745

(56) Documents cités:
- WO-A1-2007/033747
- FR-A1- 2 932 764
- GB-A- 2 204 284

## Description

La présente invention concerne un ensemble de structure de carrosserie de véhicule automobile avec une traverse supérieure adaptée pour un toit ouvrant ou non ouvrant.

Dans un véhicule à toit ouvrant, il est connu d'utiliser un ensemble de structure formant un pavillon de toit ouvrant comportant deux arcs de pavillon adaptés pour coopérer avec le panneau mobile du toit ouvrant en position fermée. Une traverse avant de pavillon est solidarisée, suivant une direction transversale du véhicule, à chaque arc de pavillon de façon à être disposée près de la partie supérieure de la baie de pare-brise avant. Dans un véhicule équipé d'un toit non ouvrant, aussi dénommé toit normal, une peau de toit ouvrant est calée sur une feuillure arrière de la traverse avant de pavillon.

Il est connu d'utiliser des traverses avant différentes selon que le toit est ouvrant ou non. Ceci augmente le nombre de types de traverses à tenir disponibles pour le montage d'un toit ouvrant ou non et occasionne la gestion de deux références d'éléments, à savoir une traverse avant pour toit ouvrant et une traverse avant pour toit non ouvrant.

Il y a donc un coût de montage supplémentaire dû à deux outils d'emboutissage supplémentaires associé à un coût de stockage augmenté dû à une référence supplémentaire de traverse à stocker.

Il est aussi connu d'utiliser la même traverse avant pour tous les types de toit. Il résulte de cela que la peau de toit ouvrant n'est pas correctement calée lors du montage d'une traverse dite universelle plus précisément adaptée à un toit ouvrant qu'à un toit non ouvrant. Dans ce cas, la peau de toit non ouvrant formant pavillon peut s'enfoncer faute de soutien, ce qui représente un défaut grave en plus de contribuer à un esthétisme défaillant.

Le document DE-A-102008045574 décrit une structure dotée d'un toit ouvrant dans un véhicule de transport de personnes, lequel toit présente une ouverture de toit délimitée par des supports de toit latéraux et des supports de toit transversaux, le toit étant mobile entre une position d'ouverture et une position de fermeture. Chaque support de toit latéral, vu selon la section transversale du toit, comporte un support de structure qui comporte des rails de guidage pour le toit mobile, les rails de guidage étant recouverts par un élément de couverture qui pointe en éloignement d'un côté supérieur du véhicule.
Le document GB 2 204 284 A décrit un ensemble de structure de carrosserie de véhicule automobile selon le préambule de la revendication 1.

Ce document ne donne aucun enseignement quant à l'élaboration d'une traverse avant de pavillon qui puisse aussi bien servir pour un toit ouvrant que pour un toit non ouvrant en étant adaptée à la fois à un toit normal et à un toit ouvrant.

Par conséquent, le problème à la base de l'invention est de proposer un ensemble de structure de carrosserie de véhicule automobile formant pavillon qui soit adaptable aussi bien à un toit ouvrant qu'à un toit non ouvrant.

Pour atteindre cet objectif, il est prévu selon l'invention un ensemble de structure de carrosserie de véhicule automobile formant un pavillon à toit ouvrant ou à toit non ouvrant, l'ensemble de structure comportant au moins un arc de pavillon et une traverse avant de pavillon solidarisée audit au moins un arc de pavillon de façon à être disposée près d'une partie supérieure d'une baie de pare-brise avant, la traverse avant présentant une feuillure arrière s'étendant transversalement par rapport audit au moins un arc de pavillon, caractérisé en ce que la traverse avant est configurée pour s'adapter à un toit ouvrant ou à un toit non ouvrant, la feuillure arrière de la traverse avant présentant au moins un bossage faisant saillie vers le toit ouvrant ou le toit non ouvrant, ledit au moins un bossage pénétrant dans un ajour respectif porté par un cadre de toit ouvrant ou ledit au moins un bossage servant d'élément de calage pour le toit non ouvrant.

L'effet technique est d'obtenir une traverse avant qui soit compatible aussi bien à un toit ouvrant qu'à un toit non ouvrant. Pour un toit non ouvrant, la traverse avant présente le ou les bossages pénétrant dans un élément associé au toit ouvrant tandis que le ou les bossages servent d'éléments de calage pour une peau de toit, dans le cas d'un toit non ouvrant.

Avantageusement, au moins deux bossages sont disposés selon une longueur de la feuillure arrière de traverse avant, lesdits au moins deux bossages étant disposés symétriquement par rapport au milieu de la longueur de la feuillure arrière de traverse avant. La solidarisation avec un élément du toit ouvrant ou le calage d'une peau de toit non ouvrant est ainsi symétriquement répartie sur la feuillure arrière de la traverse avant.

Avantageusement, lesdits au moins deux bossages sont disposés entre un quart et un tiers de la longueur de la feuillure arrière de traverse avant en partant d'une extrémité longitudinale de la feuillure arrière. Les bossages sont ainsi disposés en étant ni trop loin ni trop près des extrémités longitudinales de la feuillure arrière de la traverse avant.

Avantageusement, quand le toit est non ouvrant, ledit au moins un bossage sert d'interface pour poser un mastic de calage pour une peau de toit non ouvrant. Un toit non ouvrant n'est pas traversé par le ou les bossages qui ne pénètrent dans aucun élément solidaire du toit ouvrant et ne servent qu'au support et au calage de la peau de toit.

Avantageusement, quand le toit est ouvrant, l'ensemble comporte une fermeture de traverse superposée au moins partiellement à la traverse avant, une portion de la fermeture de traverse en vis-à-vis de la feuillure arrière de traverse avant comportant au moins un ajour associé audit au moins un bossage.

Cette fermeture de traverse n'est pas indispensable et est même à éviter pour un toit non ouvrant. La feuillure arrière de la traverse avant est donc d'une configuration apte à travailler avec ou sans fermeture de traverse.

Avantageusement, quand le toit est un toit ouvrant, le cadre de toit ouvrant supporte un enjoliveur de toit ouvrant.

Avantageusement, le cadre de toit ouvrant est lié à la traverse supérieure par un cordon de colle périphérique.

Avantageusement, la traverse avant présente une section longitudinale en forme de U élargi, une première branche du U dirigée vers l'arrière de la traverse avant portant ledit au moins un bossage étant plus longue qu'une deuxième branche du U dirigée vers l'avant de la traverse avant.

Avantageusement, quand le toit est un toit non ouvrant, une peau du toit non ouvrant est appliquée contre et soudée à une extrémité libre de la deuxième branche du U.

L'invention concerne un véhicule automobile comportant un toit ouvrant ou un toit non ouvrant, caractérisé en ce qu'il comprend un tel ensemble de structure.

D'autres caractéristiques, buts et avantages de la présente invention apparaîtront à la lecture de la description détaillée qui va suivre et au regard des dessins annexés donnés à titre d'exemples non limitatifs et sur lesquels :

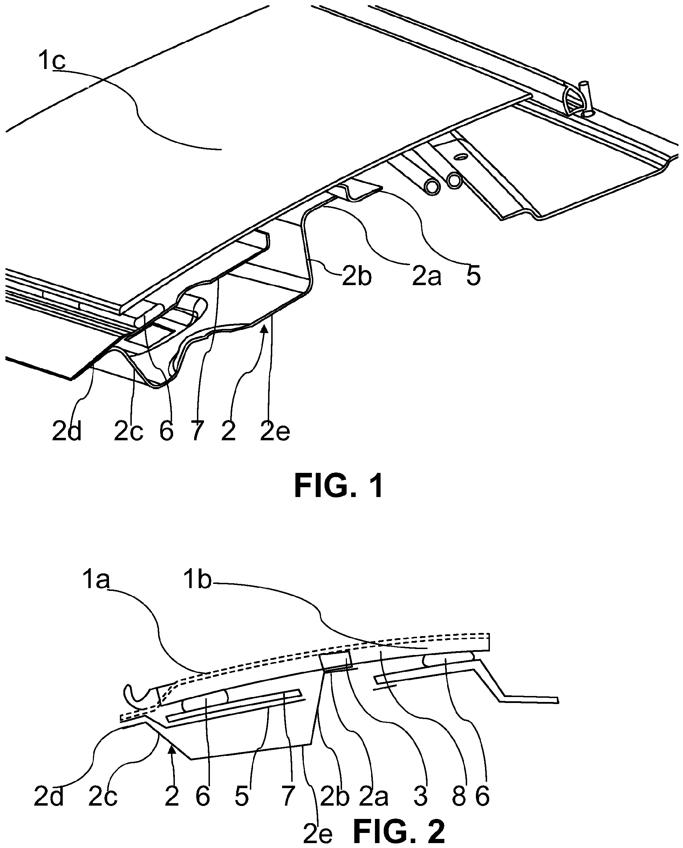

- la figure 1 est une représentation schématique d'une vue de dessus en perspective d'une demi-coupe d'un toit ouvrant de véhicule automobile, une traverse avant pouvant faire partie de l'ensemble de structure selon la présente invention quand au moins un bossage lui est associé, étant visible à cette figure,
- la figure 2 est une représentation schématique d'une coupe longitudinale d'un ensemble de structure selon la présente invention, cet ensemble de structure comportant une traverse avant de pavillon dont la feuillure arrière est adaptée pour supporter un toit ouvrant et un toit non ouvrant, les deux toits étant illustrés à la figure 1 bien que non présents ensemble en montage normal,

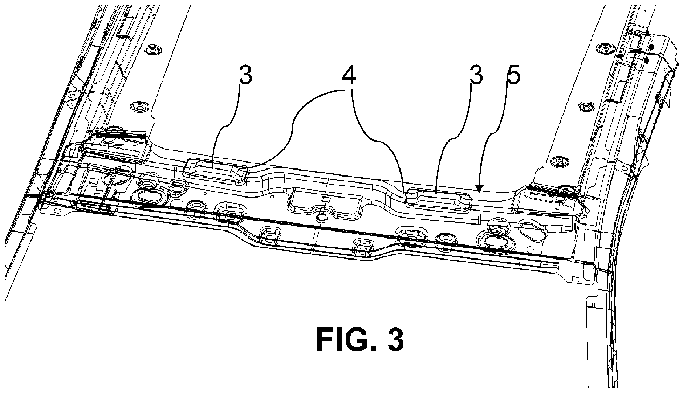

- la figure 3 est une représentation schématique d'une vue de dessus en perspective d'une fermeture de traverse avant utilisée dans le cas d'un toit ouvrant, deux bossages appartenant à une traverse avant de pavillon faisant partie de l'ensemble de structure selon la présente invention étant visibles à cette figure en pénétrant dans un ajour respectif de la fermeture de traverse.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

Dans ce qui va suivre, on comprend les termes « supérieur », « inférieur », et autres références à des positionnements spatiaux en référence aux composants positionnés dans leur position de fonctionnement et d'usage non ouvrant, notamment quand le véhicule automobile se trouve sur un plan horizontal.

En se référant aux figures 1 à 3, la présente invention concerne un ensemble de structure de carrosserie de véhicule automobile formant un pavillon à toit ouvrant 1c ou à toit non ouvrant. L'ensemble de structure comporte au moins un arc de pavillon et une traverse avant 2 de pavillon solidarisée audit au moins un arc de pavillon de façon à être disposée près d'une partie supérieure d'une baie de pare-brise avant non montrée aux figures mais se trouvant vers la portion gauche de la figure 1.

La traverse avant 2 de pavillon présente une feuillure arrière 2a s'étendant transversalement par rapport audit au moins un arc de pavillon. La traverse avant 2 est configurée pour s'adapter à un toit ouvrant 1c ou à un toit non ouvrant, les deux étant illustrés à la figure 2 bien qu'un seul type de toit soit effectivement présent.

La feuillure arrière 2a de la traverse avant 2 présente au moins un bossage 3, visible à la figure 3 sous la forme de deux bossages 3. Ce ou ces bossages 3 font saillie vers le toit ouvrant 1c ou le toit non ouvrant. Pour un toit ouvrant 1c, le ou les bossages 3 pénètrent dans un ajour 4 respectif porté par un cadre 7 de toit ouvrant 1c.

Pour un toit non ouvrant, le ou les bossages 3 servent d'interfaces pour poser un mastic de calage pour une peau de toit non ouvrant. Aucun ajour n'est montré aux figures pour un cadre 7 de toit ouvrant 1c mais un ajour 4 est montré à la figure 3 pour une fermeture de traverse 5.

A la figure 3, il est visible qu'il y a au moins deux bossages 3 qui sont disposés selon une longueur de la feuillure arrière 2a de traverse avant 2. Les deux bossages 3 peuvent être disposés symétriquement par rapport au milieu de la longueur de la feuillure arrière 2a de traverse avant 2.

Les deux bossages 3 peuvent être disposés entre un quart et un tiers de la longueur de la feuillure arrière 2a de traverse avant 2 en partant d'une extrémité longitudinale de la feuillure arrière 2a. Ainsi, les deux bossages 3 laissent de la place dans la portion médiane longitudinale de la feuillure arrière 2a de traverse avant 2 tout en n'étant pas trop éloignés ni trop proches des extrémités longitudinales de la feuillure arrière 2a.

Comme il peut être vu à la figure 2, quand le toit est non ouvrant, le ou les bossages 3 peuvent servir d'éléments de calage pour une peau 1a de toit non ouvrant en s'appliquant contre la face interne de la peau 1a de toit non ouvrant afin que cette peau ne fléchisse pas en se courbant avec vers le bas.

Comme il peut aussi être vu à la figure 2 et aussi à la figure 3, quand le toit est ouvrant, l'ensemble comporte une fermeture de traverse 5 superposée au moins partiellement à la traverse avant 2. Une portion de la fermeture de traverse 5 en vis-à-vis de la feuillure arrière 2a de traverse avant 2 peut comporter au moins un ajour 4 associé audit au moins un bossage 3.

L'ajour 4 ou chaque ajour 4 est de dimensions telles qu'il permet l'insertion du bossage 3 en son intérieur pour que l'ajour 4 soit traversé avec un jeu juste suffisant par le bossage 3. Le bossage 3 ne peut donc que faiblement bouger aussi bien dans la largeur de la fermeture de traverse 5 que dans sa longueur quand inséré dans l'ajour 4.

Comme montré à la figure 2, quand le toit est un toit ouvrant 1c, le cadre 7 de toit ouvrant 1c peut supporter un enjoliveur 1b de toit ouvrant 1c, destiné à cacher notamment le cadre 7 de toit ouvrant 1c. L'enjoliveur 1b de toit ouvrant 1c peut être solidarisé avec le cadre 7 de toit ouvrant 1c par au moins deux cordons de colle 6. De plus, le cadre de toit ouvrant peut être lié à la traverse supérieure par un cordon de colle périphérique qui assure la cohésion de l'assemblage et l'étanchéité.

Toujours en se référant à la figure 2 mais aussi à la figure 1, la traverse avant 2 peut présenter une section longitudinale en forme de U élargi, c'est-à-dire avec des branches divergeant l'une de l'autre. Une première branche 2a, 2b du U peut être dirigée vers l'arrière de la traverse avant 2 et comporter la feuillure arrière 2a de traverse avant 2 portant le ou les bossages 3. L'autre branche du U, soit la deuxième branche 2c, 2d du U peut être moins longue que la première branche 2a, 2b du U.

La deuxième branche 2c, 2d du U est dirigée vers l'avant de la traverse avant 2, c'est-à-dire vers le pare-brise. Les extrémités libres des première 2a, 2b et deuxième branches 2c, 2d sont recourbées. La base 2e du U réunit les première 2a, 2b et deuxième branches 2c, 2d du U.

La traverse avant 2 de pavillon peut être une tôle. Pour un toit non ouvrant, une extrémité de la peau 1a de toit non ouvrant ou, pour un toit ouvrant 1c, une extrémité de fermeture de traverse 5 peuvent être réunis avec l'extrémité libre 2c recourbée de la deuxième branche 2c, 2d de la traverse avant 2, ces éléments pouvant être respectivement soudés ensemble.

L'ensemble de structure peut former une région creuse près de l'intersection entre l'arc de pavillon et la traverse avant 2. Ainsi, une telle région creuse augmente la résistance mécanique de l'ensemble de structure aux contraintes résultant de choc frontal et/ou latéral et en torsion de la caisse, ce qui contribue à limiter l'enfoncement de l'arc de pavillon lors d'un choc ou d'une torsion.

L'invention concerne aussi un véhicule automobile comportant un toit ouvrant 1c ou un toit non ouvrant, comprenant un tel ensemble de structure.

L'invention n'est nullement limitée aux modes de réalisation décrits et illustrés qui n'ont été donnés qu'à titre d'exemples.

## Revendications

1. Ensemble de structure de carrosserie de véhicule automobile formant un pavillon à toit ouvrant (1c) ou à toit non ouvrant, l'ensemble de structure comportant au moins un arc de pavillon et une traverse avant (2) de pavillon solidarisée audit au moins un arc de pavillon de façon à être disposée près d'une partie supérieure d'une baie de pare-brise avant, la traverse avant (2) présentant une feuillure arrière (2a) s'étendant transversalement par rapport audit au moins un arc de pavillon, la traverse avant (2) étant configurée pour s'adapter à un toit ouvrant (1c) ou à un toit non ouvrant, l'ensemble étant **caractérisé en ce que** la feuillure arrière (2a) de la traverse avant (2) présente au moins un bossage (3) faisant saillie vers le toit ouvrant (1c) ou le toit non ouvrant, ledit au moins un bossage (3) pénétrant dans un ajour (4) respectif porté par un cadre (7) de toit ouvrant (1c) ou ledit au moins un bossage (3) servant d'élément de calage pour le toit non ouvrant.

2. Ensemble selon la revendication précédente, dans lequel au moins deux bossages (3) sont disposés selon une longueur de la feuillure arrière (2a) de traverse avant (2), lesdits au moins deux bossages (3) étant disposés symétriquement par rapport au milieu de la longueur de la feuillure arrière (2a) de traverse avant (2).

3. Ensemble selon la revendication précédente, dans lequel lesdits au moins deux bossages (3) sont disposés entre un quart et un tiers de la longueur de la feuillure arrière (2a) de traverse avant (2) en partant d'une extrémité longitudinale de la feuillure arrière (2a).

4. Ensemble selon l'une quelconque des revendications précédentes, dans lequel, quand le toit est non ouvrant, ledit au moins un bossage (3) sert d'interface pour poser un mastic de calage pour une peau (1a) de toit non ouvrant.

5. Ensemble selon l'une quelconque des revendications précédentes, dans lequel, quand le toit est ouvrant, l'ensemble comporte une fermeture de traverse (5) superposée au moins partiellement à la traverse avant (2), une portion de la fermeture de traverse (5) en vis-à-vis de la feuillure arrière (2a) de traverse avant (2) comportant au moins un ajour (4) associé audit au moins un bossage (3).

6. Ensemble selon l'une quelconque des revendications précédentes, dans lequel, quand le toit est un toit ouvrant (1c), le cadre (7) de toit ouvrant (1c) supporte un enjoliveur (1b) de toit ouvrant (1c).

7. Ensemble selon la revendication précédente, dans lequel, le toit ouvrant est lié à la traverse supérieure par un cordon de colle périphérique.

8. Ensemble selon l'une quelconque des revendications précédentes, dans lequel la traverse avant (2) présente une section longitudinale en forme de U élargi, une première branche (2a, 2b) du U dirigée vers l'arrière de la traverse avant (2) portant ledit au moins un bossage (3) étant plus longue qu'une deuxième branche (2c, 2d) du U dirigée vers l'avant de la traverse avant (2).

9. Ensemble selon la revendication précédente, dans lequel, quand le toit est un toit non ouvrant, une peau (1a) du toit non ouvrant est appliquée contre et soudée à une extrémité libre (2d) de la deuxième branche (2c, 2d) du U.

10. Véhicule automobile comportant un toit ouvrant (1c) ou un toit non ouvrant, **caractérisé en ce qu'**il comprend un ensemble de structure selon l'une quelconque des revendications précédentes.

## Patentansprüche

1. Eine Karosseriestruktur eines Kraftfahrzeugs, die einen Dachfenster (1c) oder einen Dachrahmen (2) mit einem nicht öffnenden Dach bildet, wobei der Aufbau mindestens einen Dachbogen und einen vorderen Dachsteg (2) aufweist, der mit dem mindestens einen Dachbogen so fest verbunden ist, dass er in der Nähe eines oberen Teils eines vorderen Windschutzscheibenrahmens angeordnet ist, wobei der vordere Steg (2) einen sich quer zu dem vorderen Dachbogen (2a) erstreckt Mindestens ein Dachbogen, wobei der vordere Querträger (2) zur Anpassung an ein Schiebedach (1c) oder ein nicht-Schiebedach ausgebildet ist, wobei die Anordnung **dadurch gekennzeichnet ist, dass** der hintere Falz (2a) des vorderen Querträgers (2) mindestens einen Vorsprung (3) aufweist, der in Richtung auf das Schiebedach (1c) oder das nicht-Schiebedach vorsteht, wobei der mindestens eine Vorsprung (3) in einen Durchtritt (4) jeweils von einem Rahmen (7) für ein Schiebedach (1c) oder wenigstens einem Vorsprung (3) getragen, der als Keilelement für das Schiebedach dient Ordnung nach dem vorhergehenden Anspruch, bei der mindestens zwei Vorsprünge (3) entlang einer Länge der hinteren Falte (2a) des vorderen Querträgers (2) angeordnet sind, wobei die mindestens zwei Vorsprünge (3) symmetrisch bezüglich der Mitte der Länge der hinteren Falte des vorderen Querträgers (2) angeordnet sind.

2. Eine Anordnung nach dem vorhergehenden Anspruch, wobei die mindestens zwei Vorsprünge (3) zwischen einem Viertel und einem Drittel der Länge des hinteren Falzes (2a) des vorderen Querträgers (2) von einem Längsende des hinteren Falzes (2a) aus angeordnet sind.

3. Eine Anordnung nach einem der vorhergehenden Ansprüche, bei der, wenn das Dach nicht geöffnet ist, der mindestens eine Vorsprung (3) als Schnittstelle dient, um eine Abstellmasse für eine nicht öffnende Dachhaut (1a) anzuordnen.

4. Eine Anordnung nach einem der Ansprüche 1 bis 3, bei der die Anordnung einen Riegelverschluss (5) aufweist, der zumindest teilweise über dem vorderen Riegel (2) liegt, wobei ein Teil des Riegelverschlusses (5), der dem hinteren vorderen Riegelbogen (2a) gegenüberliegt, mindestens einen Durchbruch (4) aufweist, der dem mindestens einen Vorsprung (3) zugeordnet ist.

5. Eine Anordnung nach einem der Ansprüche 1 bis 3 oder nach Anspruch 5, bei der der Schiebedachrahmen (7) eine Schieberkappe (1b) (1c) trägt.

6. Eine Anordnung nach dem vorhergehenden Anspruch, wobei das Schiebedach mit dem oberen Querträger durch eine umlaufende Klebernaht verbunden ist.

7. Eine Anordnung nach dem vorhergehenden Anspruch, wobei das Schiebedach mit dem oberen Querträger durch eine umlaufende Klebernaht verbunden ist.

8. Eine Anordnung nach einem der vorhergehenden Ansprüche, bei der der vordere Querträger (2) einen vergrößerten U-förmigen Längsabschnitt aufweist, wobei ein erster Schenkel (2a, 2b) des U, der nach hinten von dem vorderen Querträger (2) gerichtet ist, der den mindestens einen Vorsprung (3) trägt, länger ist als ein zweiter Schenkel (2c, 2d) des U, der nach vorne von dem vorderen Querträger (2) gerichtet ist.

9. Eine Anordnung nach einem der Ansprüche 1 bis 4 in Kombination mit Anspruch 8, bei der eine Haut (1a) des nicht öffnenden Daches an einem freien Ende (2d) des zweiten U-Schenkels (2c, 2d) anliegt und angeschweißt ist.

10. Ein Kraftfahrzeug mit einem Schiebedach (1c) oder einem nicht-Schiebedach, **dadurch gekennzeichnet, dass** es eine Strukturanordnung nach einem der vorhergehenden Ansprüche umfasst.

## Claims

1. Motor vehicle body structure set forming a pavilion with an opening roof (1c) or a non-opening roof, the structured set consisting of at least one pavilion arc and one front bow (2) of a roof, joined to at least one pavilion arc, so that it is positioned near a top part of a front windscreen bay, the front bow (2) having a back rebate (2a), extending horizontally from at least one pavilion arc, the front bow (2) being configured to fit to an opening roof (1c) or a non-opening roof, the combination being **characterized in that** the back rebate (2a) of the front bow (2) has at least one boss (3) projecting towards the opening roof (1c) or the non-opening roof, the said at least one boss entering into a respective blanking (4), carried by a framework (7) of a opening roof (1c), or at least one boss (3) serving as a element for the non- roof.

2. Set in accordance with the previous claim, in which at least two bosses (3) are organised according to a length of the back rebate (2a) of the front bow (2), the two or more bosses (3) are organised symmetrically, in relation with the middle of the length of the back rebate (2a) of the front bow (2).

3. Set according to the previous claim, in which the said two or more bosses (3) are organised between one quarter and one third of the length of the back rebate (2a) of the front bow (2) from a longitudinal end of the back rebate (2a).

4. Set in accordance with any of the preceding claims, in which, when the roof is not an opening one, the said at least one boss (3) is used as an interface to place a stalling mastic for a non-opening roof outer layer (1a).

5. Set under one of claims 1 to 3, in which the set includes a crossmember closing (5) at least partially overlapped with the front bow (2), a portion of the crossmember closing (5) opposite the back rebate (2a) front bow (2) having at least one blanking (4) associated to at least one boss (3).

6. Set according to one of the claims 1 to 3 or according to claim 5, in which the framework (7) of an opening roof (1c) supports one hubcap (1b) of an opening roof (1c).

7. Set according to the previous claim, in which the opening roof (1c) is connected to the top crossmember by a peripheral glue cord.

8. Set in accordance with any of the preceding claims, in which the front bow (2) has an enlarged U-shaped longitudinal segment, a first branch (2a, 2b) of the U directed towards the back of the front bow (2), bearing at least one boss (3) longer than a second branch (2c, 2d) of the U directed towards the front of the front cross (2).

9. Set according to one of the claims 1 to 4 in combination with claim 8, in which an outer layer (1a) of the non-opening roof is applied and welded at a free end (2d) of the second branch (2c, 2d) of the U.

10. Motor vehicle with an opening roof (1c) or a non-opening roof, characterized as it includes a structure set according to any of the previous claims.
